# EUROPEAN PATENT APPLICATION

(11) **EP 4 811 115 A1**
(43) Date of publication of application: **23.09.2026**
(21) Application number: 25164535.4
(22) Date of filing: 18.03.2025
(51) Int. Cl.: G06F 8/41, G06F 8/75

(54) **A METHOD AND SYSTEM FOR ANALYZING A SOURCE CODE OF AN INDUSTRIAL CONTROL PROGRAM**

(71) Applicant: CODESYS Holding GmbH, 87439 Kempten (DE)
(72) Inventor: Werner, Bernhard, 87437 Kempten (DE); Gleich, Martin, 87435 Kempten (DE)
(74) Representative: Lucke, Andreas

(57) **Abstract**

A system for analyzing a source code of an industrial control program comprises a memory unit for providing at least a portion of the source code of the industrial control program, wherein the portion comprises at least a first plurality of input variables and at least a second plurality of output variables. The system further comprises an analysis unit for determining, for at least one output variable among the second plurality of output variables, which of the input variables among the first plurality of input variables affects the output variable; and/or for determining, for at least one input variable among the first plurality of input variables, which of the output variables among the second plurality of output variables is affected by the input variable.

## Description

### Technical Field

The present disclosure relates to the field of industrial control, and in particular to control programs for industrial equipment that are configured to meet safety and/or security requirements.

### Background

Industrial control programs may run on industrial controllers for real-time control of industrial processes, such as for control of machinery or industrial processes. In many applications, industrial control programs are written in a high-level language in a programming environment, are compiled and then stored and run on an industrial controller unit that directly controls an associated machinery or industrial process. The industrial control program may comprise a plurality of input parameters, such as setpoints for the machinery or industrial process or sensor data received from the machinery or industrial process. The industrial control program may also provide for a plurality of output parameters, such as control commands that are sent to the associated machinery or industrial process, or surveillance data that is made available to a user, possibly remotely.

Oftentimes, industrial controllers are employed to control machinery or equipment that need to fulfill certain safety and/or security requirements. For instance, safety requirements are intended to ensure the safety of the personnel operating the machinery or moving in the vicinity of the machinery. Provisions such as sensors or automatic vigilance devices (sometimes also known as a dead-man switch) may be employed to enhance the safety of the machinery, and the operation of these safety features may likewise be controlled by the industrial control program running on the industrial controller unit.

Security requirements are intended to prevent an intrusion of a malicious third-party into the industrial control environment, or at least to detect any such intrusion and to limit its effect on the industrial control program. This is particularly challenging given that industrial control environments often need to be accessible from outside networks to allow for remote monitoring or remote maintenance, and hence oftentimes cannot be completely sealed.

Both the safety requirements and the security requirements pose challenges for the programmer of an industrial control program. In particular, under both angles it is advantageous for the programmer to understand well which input variables affect which output variables of the industrial control program, to make sure that safety measures are effective and/or to limit the unwanted backlash of parameters on safety-critical and/or security-critical program variables.

A static taint analysis has emerged as a helpful tool to detect software vulnerabilities, such as code injection or cross-site scripting. These techniques are discussed in S. Arzt et al., "FlowDroid: Precise Context, Flow, Field, Object-sensitive and Lifecycle-aware Taint Analysis for Android Apps", ACM SIGPLAN Notices, vol. 49, issue 6, June 2014, and N. Allen et al., "IFDS Taint Analysis with Access Paths", arXiv:2103.16240 v1, 30 Mar. 2021.

### Overview

In view of the Background art, what is needed is an improved method and system for analyzing a source code of an industrial control program, in particular for identifying interdependencies between input variables and output variables of the industrial control program.

This objective is achieved with a method and system for analyzing a source code of an industrial control program according to independent claims 1 and 14, respectively. The dependent claims relate to optional embodiments.

According to a first aspect, the disclosure relates to a method for analyzing a source code of an industrial control program, wherein the method comprises providing at least a portion of the source code of the industrial control program, wherein the portion comprises at least a first plurality of input variables and at least a second plurality of output variables. The method further comprises determining, for at least one output variable among the second plurality of output variables, which of the input variables among the first plurality of input variables affects the output variable; and/or determining, for at least one input variable among the first plurality of input variables, which of the output variables among the second plurality of output variables is affected by the input variable.

The method according to the present disclosure may allow to reliably establish the interdependencies of the input variables and the output variables of the industrial control program. For instance, the method may result, for a given output variable, in a list of those input variables that affect the output variable. Similarly, the method may yield, for a given input variable, a list of those output variables that are affected by the input variable. A programmer may use these results to check the interdependencies between the input variables and the output variables of the industrial control program.

In the context of a safety analysis, these techniques may e.g. be employed to check whether a safety-relevant input variable affects all the necessary output variables to respond to a safety-critical event, such as to effect an emergency shutdown of the controlled machinery or industrial process.

In the context of a security analysis, the techniques of the present disclosure may e.g. be employed to identify which security-critical output variables are affected by input variables that may be vulnerable to an attack by a malicious third party. The analysis results may then be employed to harden the industrial control program against unauthorized access.

Advantageously, the techniques according to the present disclosure may allow to derive these results from an analysis of the source code of the industrial control program, i.e., at the programming stage and without the need to compile the industrial control program or even to run the industrial control program on an industrial controller unit.

In particular, the method may comprise determining, from the portion of the source code, for at least one output variable among the second plurality of output variables, which of the input variables among the first plurality of input variables affects the output variable; and/or determining, from the portion of the source code, for at least one input variable among the first plurality of input variables, which of the output variables among the second plurality of output variables is affected by the input variable.

In the context of the present disclosure, an input variable may pertain to any input parameter and/or input value that can take a plurality of values and that is adapted to be input to the industrial control program.

For instance, an input variable may pertain to any operator input, such as a set point for the controlled machinery, or may pertain to any input received from the industrial process or controlled machinery, for instance to sensor data received from the industrial process or controlled machinery.

Similarly, in the context of the present disclosure, an output variable may pertain to any output of the industrial control program that may take a plurality of values. Output variables of the industrial control program may comprise control values or commands, which may be sent to the industrial process or controlled machinery, such as via an industrial network, for instance a fieldbus network, so as to control the industrial process. However, output variables may also comprise output data adapted to be stored in a database, or adapted to be provided to a user for display and/or analysis.

In some instances, output variables of the portion of the source code of the industrial control program may serve as input variables for another portion of the industrial control program, or for another industrial control program. Hence, the roles of the input variables and output variables may change in the course of the program flow, and some variables may serve both as input variables and as output variables.

In the context of the present disclosure, a first variable affects a second variable, or the second variable is affected by the first variable, if a change in the first variable may have an (indirect or direct) influence on the second variable, or if the first variable may taint the second variable.

According to an embodiment, the method further comprises converting the portion of the source code into an auxiliary code.

The auxiliary code may be a code that may be longer than the portion of the source code, but may be of a lower level of complexity, and hence may be easier to analyze, in particular easier to analyze automatically.

For instance, the auxiliary code may contain only unary operations and/or binary operations, and/or the auxiliary code may be free from nested procedures.

In particular, the auxiliary code may be free from deference cascades and/or nested component accesses.

The auxiliary code may also be free from control instructions, instance variables and/or static variables.

However, the auxiliary code may comprise jumps and/or labels and/or local variables.

According to an embodiment, each command in the auxiliary code may have no more than two subsequent commands to which it refers. In particular, each command in the auxiliary code may have zero, one, or two subsequent commands to which it refers.

A command may correspond to a line of the source code and/or of the auxiliary code.

In the context of the present disclosure, a first command may refer to a second command if the first command contains a label of the second command, or if the first command invokes the second command.

According to an embodiment, converting the portion of the source code into the auxiliary code may comprise introducing a plurality of auxiliary variables into the auxiliary code.

For instance, the auxiliary variables may be adapted to store intermediate values pertaining to nested procedures in the portion of the original source code, prior to conversion.

According to an embodiment, the method may comprise adding to an if statement, in the portion of the source code or in the auxiliary code, an empty else statement.

By means of the expansion of the if statement, the resulting code is simplified, and each subsequent operation depends on at most one condition. This may facilitate an (automatic) analysis of the interdependencies of the commands of the industrial control program.

The conversion of the source code into the auxiliary code may make the industrial control program harder to read for the human programmer, and may significantly increase the length (in terms of code lines or commands) of the industrial control program. But these disadvantages may be overcompensated by the decrease in complexity, which may make the converted industrial control program easier to analyze for interdependencies between the input variables and the output variables.

Hence, according to an embodiment, the (automatic) analysis of the interdependencies between the input variables and the output variables may be run on the auxiliary code.

According to an embodiment, the determining comprises determining, from the auxiliary code, for at least one output variable among the second plurality of output variables, which of the input variables among the first plurality of input variables affects the output variable; and/or determining, from the auxiliary code, for at least one input variable among the first plurality of input variables, which of the output variables among the second plurality of output variables is affected by the input variable.

According to an embodiment, the method further comprises converting the portion of the source code or the auxiliary code, respectively, into a control flow graph.

The control flow graph permits a further simplified analysis of the interdependencies between the input variables and the output variables of the industrial control program.

According to an embodiment, the control flow graph comprises a plurality of code blocks, wherein each code block comprises at least one command.

According to an embodiment, in each code block among the plurality of code blocks, a command of the source code or the auxiliary code, respectively, that refers to another command of the source code or the auxiliary code, respectively, may refer to another code block among the plurality of code blocks.

In other words, each command in a first code block that refers to another command in the source code or the auxiliary code, respectively, may effectively start a second code block, which may be connected to the first code block by means of the referral.

According to an embodiment, converting the portion of the source code or the auxiliary code, respectively, into the control flow graph may proceed in the listed order of the commands of the source code or the auxiliary code, respectively.

According to an embodiment, the control flow graph is free of loops.

In the context of the present disclosure, a loop may comprise a reference, in a command of the source code or the auxiliary code, respectively, to an earlier command, in the listed order of commands, of the source code or the auxiliary code, respectively.

According to an embodiment, the formation of loops may be avoided when building the control flow graph, such as by ignoring commands that have already been processed in converting the portion of the source code or the auxiliary code, respectively, into the control flow graph.

The method may also comprise removing loops from the control flow graph.

A control flow graph without loops simplifies the (automatic) analysis of the interdependencies between the input variables and the output variables of the industrial control program.

According to an embodiment, in the control flow graph each code block refers to at most two other code blocks.

A control flow graph in which each code block refers to no more than two other code blocks may correspond to an industrial control program or an auxiliary code that only comprises conditional jumps with a fixed destination, which further simplifies the automatic analysis of the interdependencies between the input variables and the output variables of the industrial control program.

A control flow graph that does not already have this form may be converted into this form by selectively inserting additional code blocks.

According to an embodiment, the method further comprises inserting at least one additional code block into the control flow graph.

In particular, the at least one additional code block may be inserted between a first code block among the plurality of code blocks that refers to more than one other code block, and a second code block among the plurality of code blocks to which more than one code block among the plurality of code blocks refers.

In particular, the additional code block may comprise a command that refers to the second code block.

Inserting additional code blocks into the control flow graph enhances the size of the control flow graph. However, this apparent disadvantage may be overcompensated by the decrease in complexity of the individual code blocks and their interdependencies, which may facilitate an analysis of the program conditions of the individual code blocks.

According to an embodiment, the method comprises determining, from the auxiliary code or the control flow graph, respectively, a list of conditions pertaining to each code block.

The method may further comprise assigning, from the auxiliary code or the control flow graph, respectively, variables of the source code to the auxiliary variables, such as in a list of variables.

The assignment list may facilitate the (automatic) analysis of the interdependencies between the input variables and the output variables of the industrial control program.

In particular, the determining may comprise: determining, from the control flow graph, for at least one output variable among the second plurality of output variables, which of the input variables among the first plurality of input variables affects the output variable; and/or determining, from the control flow graph, for at least one input variable among the first plurality of input variables, which of the output variables among the second plurality of output variables is affected by the input variable.

So far we have discussed determining the interdependencies of a single output variable and/or a single input variable from the portion of the source code, or from the auxiliary code, or from the control flow graph. However, the techniques of the present disclosure can be employed to establish a full view of the interdependencies between the input variables and the output variables.

Hence, according to an embodiment the determining comprises: determining, for each output variable among the second plurality of output variables, which of the input variables among the first plurality of input variables affects the output variable; and/or determining, for each input variable among the first plurality of input variables, which of the output variables among the second plurality of output variables is affected by the input variable.

The method may further comprise outputting the results of the analysis, such as in the form of a list of interdependencies between the input variables and the output variables.

According to an embodiment, the method comprises outputting, for the at least one output variable among the second plurality of output variables, which of the input variables among the first plurality of input variables affects the output variable; and/or outputting, for the at least one input variable among the first plurality of input variables, which of the output variables among the second plurality of output variables is affected by the input variable.

The results of the input-output analysis may be employed to assign and/or check respective attributes to the (input and/or output) variables of the industrial control program. These attributes may comprise the designated interdependencies of the input and output variables, and may later be checked when analyzing the source code of the industrial control program according to the techniques of the present disclosure. A violation of an attribute may result in a warning notice to the programmer.

Hence, according to an embodiment the method comprises assigning a first attribute to at least one input variable among the first plurality of input variables, wherein the first attribute indicates which of the output variables among the second plurality of output variables is affected by the input variable.

Alternatively or additionally, the method may comprise assigning a second attribute to at least one output variable among the second plurality of output variables, wherein the second attribute indicates which of the input variables among the first plurality of input variables affects the output variable.

The analysis results may also be employed to assign/ allocate suitable memory locations to the input variables and/or to the output variables, such as in the random access memory and/or persistent memory of the industrial controller unit. For instance, output variables that have been identified as potentially more vulnerable to an attack from a malicious third-party may be relegated to a separate memory area, to separate and insulate them from other variables that are crucial for the safe and/or secure operation of the industrial controller unit.

According to an embodiment, the method comprises assigning a first memory location to at least one input variable among the first plurality of input variables, wherein the first memory location depends on which of the output variables among the second plurality of output variables is affected by the input variable.

Similarly, the method may comprise assigning a second memory location to at least one output variable among the second plurality of output variables, wherein the second memory location depends on which of the input variables among the first plurality of input variables affects the output variable.

According to an embodiment, the method is a computer-implemented method.

The techniques of the present enclosure, in particular for converting the source code into the auxiliary code and/or the control flow graph, may facilitate an automatic analysis of the interdependencies between the input variables and the output variables of the industrial control program.

In a second aspect, the disclosure relates to a computer program or to a computer program product comprising computer-readable instructions such that the computer-readable instructions, when executed on a computer, implement on the computer a method with some or all of the features described above with reference to the first aspect.

In a third aspect, the disclosure relates to a system for analyzing a source code of an industrial control program, the system comprising a memory unit for providing at least a portion of the source code of the industrial control program, wherein the portion comprises at least a first plurality of input variables and at least a second plurality of output variables. The system further comprises an analysis unit for determining, for at least one output variable among the second plurality of output variables, which of the input variables among the first plurality of input variables affects the output variable; and/or for determining, for at least one input variable among the first plurality of input variables, which of the output variables among the second plurality of output variables is affected by the input variable.

According to an embodiment, the memory unit may comprise a random access memory, or may be a random access memory, in particular a random access memory of a programming environment of an industrial control environment.

The analysis unit may comprise a central processing unit, or may be part of a central processing unit, in particular a central processing unit of a programming environment of an industrial control environment.

The system described above with respect to the third aspect of the disclosure may be adapted to implement a method with some or all of the features described above with reference to the first or second aspect of the disclosure.

According to an embodiment, the system further comprises a conversion unit, wherein the conversion unit is adapted to convert the portion of the source code into an auxiliary code.

According to an embodiment, the auxiliary code contains only unary operations and/or binary operations, and/or the auxiliary code is free from nested procedures, and/or each command in the auxiliary code has no more than two subsequent commands to which it refers.

According to an embodiment, the conversion unit is adapted to introduce a plurality of auxiliary variables into the auxiliary code.

The conversion unit may further be adapted to convert the portion of the source code or the auxiliary code, respectively, into a control flow graph.

According to an embodiment, the control flow graph comprises a plurality of code blocks, wherein each code block comprises at least one command.

The conversion unit may be further adapted to insert at least one additional code block into the control flow graph.

The at least one additional code block may be inserted between a first code block among the plurality of code blocks that refers to more than one other code block, and a second code block among the plurality of code blocks to which more than one code block among the plurality of code blocks refers.

According to an embodiment, the system further comprises an output unit, wherein the output unit is adapted to output, for at least one output variable among the second plurality of output variables, which of the input variables among the first plurality of input variables affects the output variable; and/or to output, for at least one input variable among the first plurality of input variables, which of the output variables among the second plurality of output variables is affected by the input variable.

According to an embodiment, the memory unit and/or the analysis unit and/or the conversion unit and/or the output unit may be functionally and/or spatially separated, and may be communicatively coupled.

According to another embodiment, the memory unit and/or the analysis unit and/or the conversion unit and/or the output unit may be integrated into a common unit.

According to an embodiment, the memory unit and/or the analysis unit and/or the conversion unit and/or the output unit may be realized in hardware.

According to another embodiment, the memory unit and/or the analysis unit and/or the conversion unit and/or the output unit may be realized in firmware or software.

According to an embodiment, the memory unit and/or the analysis unit and/or the conversion unit and/or the output unit may be partially realized in hardware and partially realized in firmware/ software.

### Brief Description of the Drawings

The details and numerous advantages of the method and system according to the disclosure will be best understood from a description of exemplary embodiments when read together with the accompanying drawings, in which:
- Fig. 1: is a schematic illustration of an industrial control environment in which a method and system according to an example may be employed;
- Fig. 2: is a schematic illustration of a system according to an example of the present disclosure;
- Fig. 3: is a flow diagram illustrating a method for analyzing a source code of an industrial control program according to an example;
- Fig. 4: is a schematic illustration of a system according to another example of the present disclosure;
- Fig. 5: is a schematic illustration of a control flow graph that may be employed in an example of the present disclosure;
- Fig. 6: is a schematic diagram for illustrating the extension of "if" statements in a source code, auxiliary code or control flow graph according to an example of the present disclosure; and
- Fig. 7: is a schematic illustration of an extended control flow graph that may be employed in an example of the present disclosure.

### Detailed Description

Examples of a method and system for analyzing a source code of an industrial control program will now be described with reference to an exemplary industrial control environment 10 that involves control of a gantry crane 12 by means of industrial control software. However, this example is merely for illustration, and in general the techniques according to the present disclosure may be employed for the industrial control of any kind of industrial process, comprising but not limited to the control of industrial machinery, robots, or chemical fabrication processes. Many of such processes have to fulfill operational safety and/or security requirements, such as requirements prescribed by law, government or industry regulations.

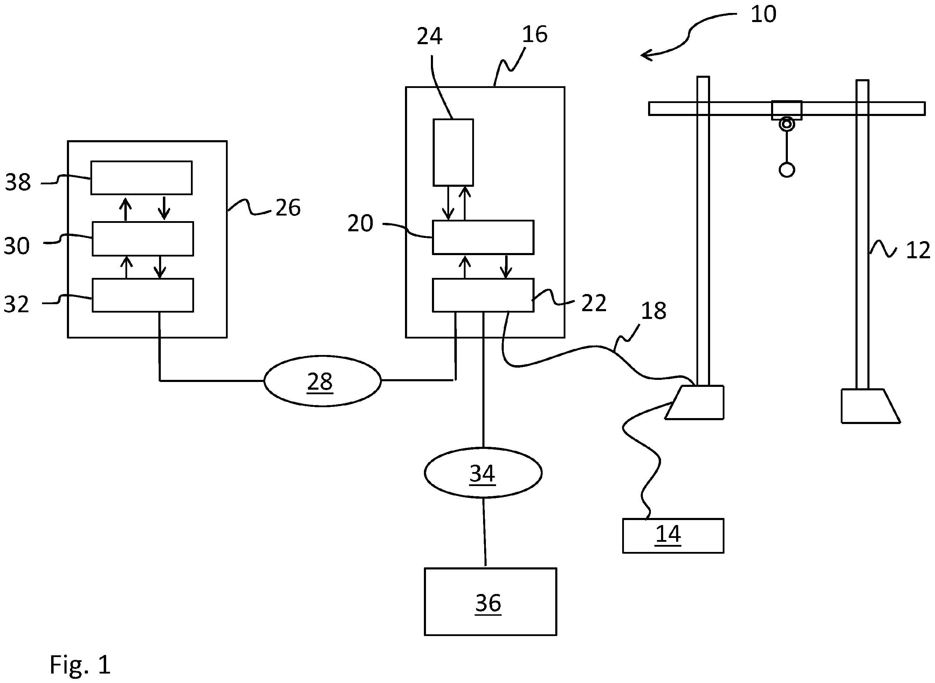

As illustrated in Fig. 1, the industrial control environment 10 comprises the gantry crane 12, which may be a crane employed in a factory environment to move heavy goods in an assembly hall. Operation of the gantry crane 12 may pose potential hazards to humans working or moving in the vicinity of the gantry crane 12. The gantry crane 12 may therefore be equipped with a vigilance switch 14 (sometimes also referred to as a "dead-man switch") that needs to be pressed continuously by a human operator, or at regular time intervals during operation of the gantry crane 12. The vigilance switch 14 makes sure that the gantry crane 12 is only ever operated under the surveillance of the human operator. In case the vigilance switch 14 is not pressed in time, a warning signal shall be emitted to alert the human operator. In case the human operator still fails to press the vigilance switch 14 even a response to the warning signal, the operation of the gantry crane 12 should be stopped, or the gantry crane 12 should be moved to a safe operational state which minimizes the risk of physical injury to the humans in the vicinity of the gantry crane 12. If the gantry crane 12 is controlled by means of industrial control software, the industrial control software may monitor the vigilance switch 14, and may need to have provisions for performing these safety-related operations upon activation of the vigilance signal.

With further reference to Fig. 1, the industrial control environment 10 additionally comprises an industrial controller unit 16 that is connected to the gantry crane 12 and the vigilance switch 14 by means of a control line 18, such as a wired or wireless connection. In other examples, the industrial controller unit 16 may be integrated into the controlled machinery, such as the gantry crane 12.

The industrial controller unit 16 may comprise a processing device 20, such as a CPU to run an industrial control program, such as in the form of a compiled program for controlling operation of the gantry crane 12. To this end, the industrial controller unit 16 comprises a communication interface 22 that is connected to the processing device 20 and is adapted to communicate with the gantry crane 12 and the vigilance switch 14 via the control line 18. For instance, the processing device 20 may provide instructions to the gantry crane 12 for operation of actuators or motors of the gantry crane 12 via the communication interface 22 and control line 18. The communication interface 22 may also receive sensor signals pertaining to an operation of the gantry crane 12 via the control line 18, and provide corresponding feedback to the processing device 20. For instance, such sensor signals may relate to safety-critical signals from the vigilance switch 14.

As further illustrated in Fig. 1, the industrial controller unit 16 also comprises a controller memory unit 24 connected to the processing device 20 and adapted to store programs, function blocks, functions, data or data structures pertaining to an operation of the industrial controller unit 16.

The industrial control environment 10 further comprises a programming environment 26 that is connected to the communication interface 22 via a network 28, such as a factory intranet or the internet. For instance, the programming environment 26 may comprise a desktop PC or other computing device and may be employed by a programmer to design and generate industrial control software for the industrial controller unit 16, for instance in the form of a compiled control program. The compiled program may be transferred from the programming environment 26 to the industrial controller unit 16 via the network 28, and may be stored in the controller memory unit 24.

With further reference to Fig. 1, the programming environment 26 comprises a programming unit 30, which a programmer may use as a tool to generate source code for an industrial control program in a high-level programming language. The programming environment 26 further comprises a compiler unit 32 which receives the source code program code from the programming unit 30 and compiles the source code to provide a compiled industrial control program, which may be sent to the industrial controller unit 16 via the network 28.

When writing the source code of the industrial control program by means of the programming unit 30, the programmer needs to guarantee a reliable operation of the vigilance switch 14. In particular, the programmer needs to make sure that an activation of the vigilance signal will properly affect the industrial controller unit 16 so that the industrial controller unit 16 immediately pauses the operation of the gantry crane 12, or moves the gantry crane into a predetermined safe operational state. Given this task, it is helpful for the programmer to understand and check how the signals provided by the vigilance sensor 14 affect the other input variables and output variables of the industrial control program. In particular, it would be advantageous for the programmer to derive this information from the source code of the industrial control program as the programmer works in the programming unit 30, without the need to compile the source code by means of the compiler unit 32, or even to run the compiled source code on the industrial controller unit 16.

As illustrated in Fig. 1, in the industrial control environment 10 the industrial controller unit 16 may be further connected via the communication interface 22 and a network 34 to a server unit 36. For instance, the network 34 may be the internet, and the server unit 36 may be employed to remotely monitor operational data pertaining to an operation of the gantry crane 12. Alternatively or additionally, the server unit 36 may be employed as a licensing server to check that software licenses of software on the industrial controller unit 16 are up to date and running, such as at regular intervals or once the industrial controller unit 16 is started up. The server unit 36 may also provide means for communicating data between the industrial controller unit 16 and other industrial controller units (not shown) that may be operational in the industrial control environment 10. The server unit 36 may also allow a user to remotely provide input to the industrial controller unit 16 that may be relevant to the operation of the gantry crane 12, such as in the form of input parameters, setpoints or recipes to be stored in the controller memory unit 24.

The enhanced user convenience that comes with the server unit 36 and the remote access to the industrial controller unit 16 via the network 34, such as via the Internet, comes with the risk of an enhanced vulnerability to attacks from malicious third parties. In order to harden the industrial control environment 10 against these attacks, it is helpful for the programmer to understand whether and how the input variables that can be provided from the server unit 36, and which have a risk of being manipulated by malicious third parties, may have a backlash on output variables that are safety-relevant and affect the operation of the gantry crane 12. Again, it would be helpful to derive this security-critical information from the source code of the industrial control program, as the programmer works in the programming unit 30, and without the need to compile the source code by means of the compiler unit 32, or even to run the compiled code on the industrial controller unit 16.

Hence, both safety regulations and security concerns may call for a better understanding and simplified testing of the interdependencies of inputs and outputs of an industrial control program, preferably from the source code of the industrial control program.

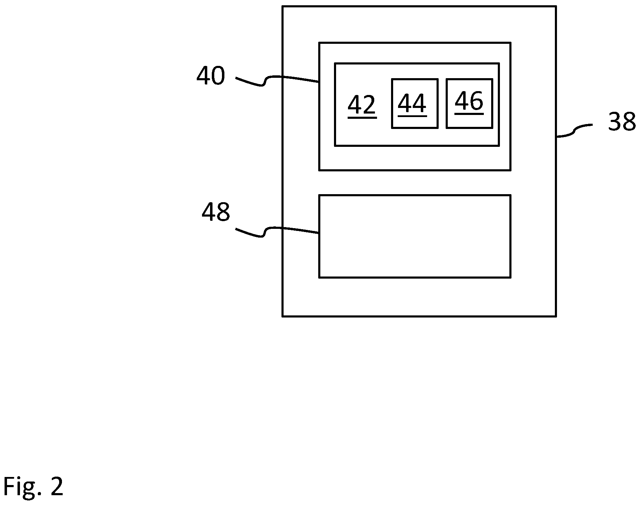

The present disclosure addresses these challenges with a system 38 for analyzing a source code of an industrial control program, as schematically illustrated in Fig. 2. The system 38 may be implemented in the programming environment 26 of the industrial control environment 10 described above with reference to Fig. 1. In some embodiments, the system 38 may also be implemented in, or as part of the programming unit 30.

With reference to Fig. 2, the system 38 for analyzing a source code of an industrial control program comprises a memory unit 40, such as a random access memory, for providing at least a portion 42 of the source code of an industrial control program. The portion 42 comprises at least a first plurality of input variables 44 of the industrial control program, and at least a second plurality of output variables 46 of the industrial control program. The input variables 44 and output variables 46 may have allocated memory locations in the memory unit 40.

The system 38 further comprises an analysis unit 48 for determining, for at least one output variable among the second plurality of output variables 46, which of the input variables among the first plurality of input variables 44 affects the output variable; and/or for determining, for at least one input variable among the first plurality of input variables 44, which of the output variables among the second plurality of output variables 46 is affected by the input variable.

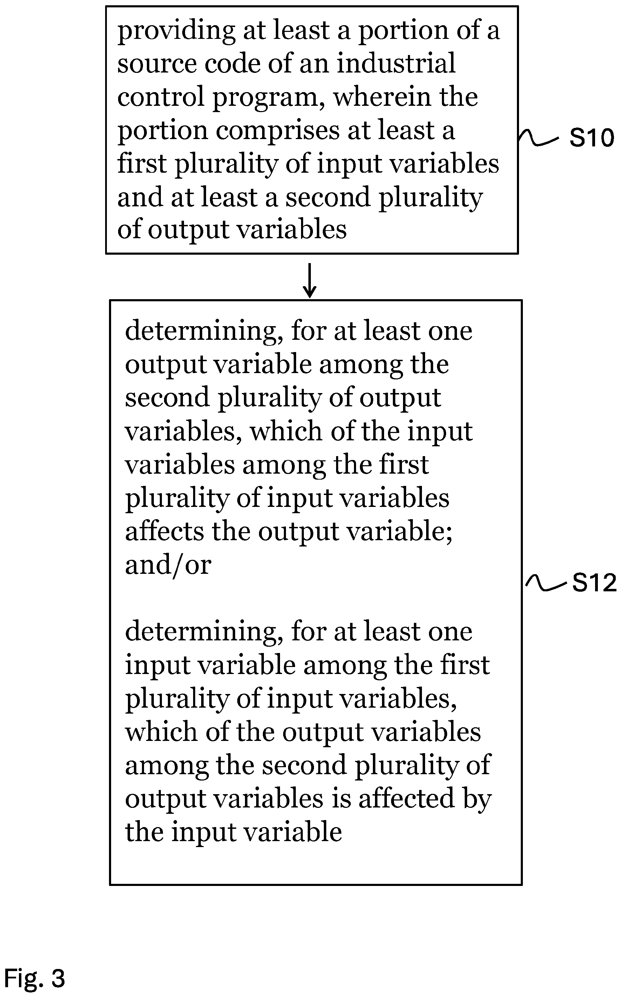

Fig. 3 schematically illustrates a flow diagram for a corresponding method for analyzing a source code of an industrial control program.

A first step S10 comprises providing at least a portion of a source code of an industrial control program, wherein the portion comprises at least a first plurality of input variables and at least a second plurality of output variables.

A second step S12 comprises determining, for at least one output variable among the second plurality of output variables, which of the input variables among the first plurality of input variables affects the output variable; and/or determining, for at least one input variable among the first plurality of input variables, which of the output variables among the second plurality of output variables is affected by the input variable.

The techniques of the present disclosure may involve a conversion of the portion 42 of the source code to facilitate the analysis. For instance, the portion 42 of the source code may be converted into an auxiliary code, which may be a simplified code that contains only unary operations and/or binary operations. The auxiliary code may also be free from nested procedures. In addition, the number of referrals in the auxiliary code may be limited. For instance, each command in the auxiliary code may only have zero, one or two subsequent commands to which it refers.

The auxiliary code will usually be significantly longer in terms of the number of commands or the number of programs lines, and may be more difficult to read and follow for a human programmer. However, these difficulties may be overcompensated by the reduced complexity of the auxiliary code, which makes it easier to analyze (automatically) the interdependencies between the input variables and the output variables.

The conversion may also comprise a conversion into a control flow graph (CFG) that comprises a plurality of code blocks. For instance, the conversion of the portion of the source code or the auxiliary code, respectively, into the control flow graph may proceed in the listed order of the commands of the source code or the auxiliary code, respectively. In each code block among the plurality of code blocks, a command of the source code or of the auxiliary code, respectively, that refers to another command of the source code or of the auxiliary code, respectively, refers to another code block among the plurality of code blocks. Hence, in the process of generating the control flow graph a new code block is generated whenever there is a referral to another command of the source code or the auxiliary code, respectively.

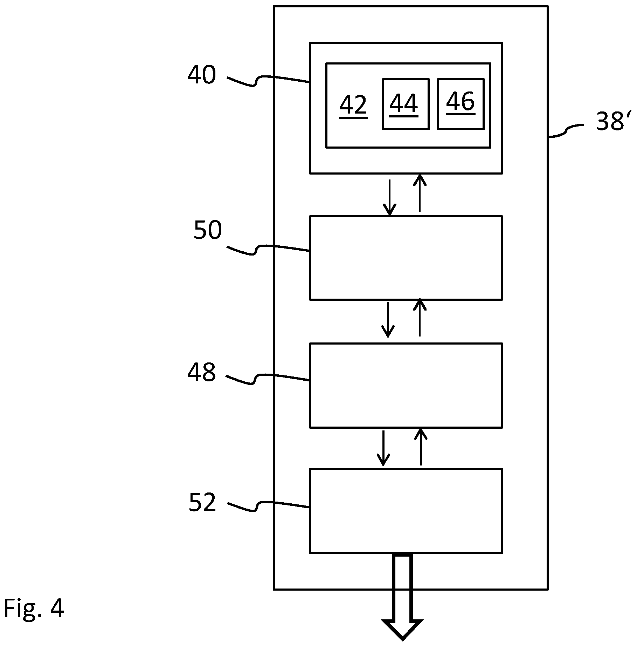

Fig. 4 is a schematic illustration of a system 38' for analyzing a source code of an industrial control program according to another embodiment.

The system 38' generally corresponds to the system 38 described above with reference to Fig. 2, and corresponding components share the same reference numerals. However, Fig. 4 shows that the system 38' additionally comprises a conversion unit 50 adapted to convert the portion of the source code into an auxiliary code, and/or adapted to convert the portion of the source code or the auxiliary code, respectively, into a control flow graph. The analysis unit 48 may determine the interdependencies between the input variables and the output variables based on the conversion of the portion 42 of the source code, as provided by the conversion unit 50.

The system 38' further comprises an output unit 52 that is adapted to output the results of the analysis provided by the analysis unit 48, such as to output the results to the programmer operating the programming unit 30.

The techniques of the present disclosure may permit the programmer to identify, in a systematic and reliable manner, which inputs of the industrial control program affect which outputs, thereby allowing the programmer to determine the sources of the physical outputs of the industrial control program. A single input may be considered a taint, and the taint may be tracked through the program flow of the industrial control program. When the taint meets an output variable, the connection between the input and the output may be recorded. The techniques of the present disclosure can be applied successively to all inputs/input variables of the industrial control program, thus allowing to create a complete table of which inputs affect which outputs.

In some examples, the derived input/output interdependencies can also be used to check a test coverage. If there is a relationship between an input variable and an output variable, there can also be provided a test in which this relationship is checked. The analysis may not directly generate the test, because it may not provide full information about the type of dependency. For instance, a rising edge in an input can lead to a falling edge in an output, or it can act with a time delay, or only in combination with other inputs. The techniques of the present disclosure may not reveal all these details, but these details can subsequently be derived from the source code once it has been established that an interdependency between a pair of input variables and output variables exist.

The techniques of the present disclosure may also allow to detect unexpected dependencies between input variables and output variables of an industrial control program. The programmer can then either document such an unexpected dependency, or take measures to rectify it.

The techniques of the present disclosure may further allow to use language extensions to formulate conditions for such dependencies, for instance conditions relating to the memory allocation, such as:
- an input address range may only affect a specific output address range; or
- an output address range may only be dependent on a specific input address range; or
- an input address range must not affect a specific output address range; or
- an output address range must not depend on a specific input address range.

Employing the analysis unit 48, a static analysis could automatically test every program change made by the programmer in the programming unit 30 against such predefined conditions, and could report a violation of such a condition as an alert to the programmer. Such an analysis could be of particular interest for digital inputs, but could also be employed for analogue values. The flow of interdependencies is not only interesting in its final result, but also as a step-by-step analysis. Every command program line that is directly or indirectly influenced by a program input could be output.

Figures 2 and 4 show the memory unit 40, the analysis unit 48, the conversion unit 50 and the output unit 52 as stand-alone units, which may be separate but communicatively connected (as indicated by the double arrows in Fig. 4). However, the present disclosure is not so limited, and in other embodiments any of the memory unit 40, analysis unit 48, conversion unit 50 and output unit 52 may also be combined into a common unit.

### (a) Example: Vigilance Switch

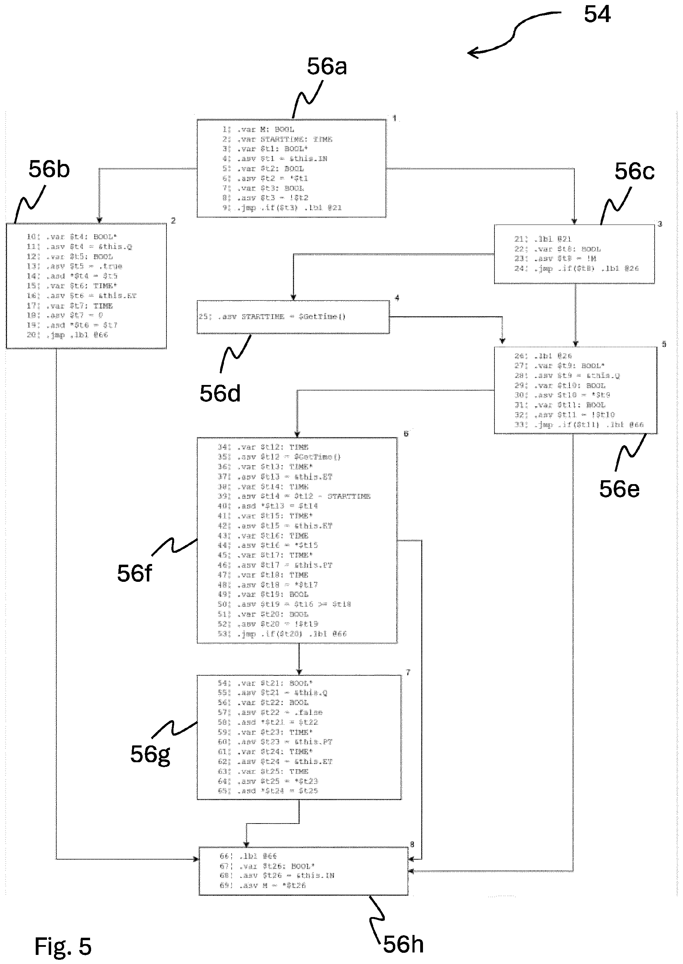

Specific techniques for the conversion and the analysis of the source code of an industrial control program will now be described in additional detail with reference to Figures 5 to 7 for the example of the vigilance switch 14.

For the sake of this presentation, we will assume that the vigilance switch 14 needs to be pressed at regular intervals to prevent the gantry crane 12 from stopping. After a predetermined first time period, such as 10 seconds, a warning light may come up on the vigilance switch 14 to remind the machine operator that the vigilance switch 14 must be pressed. After a subsequent second time period, such as 15 seconds, if the vigilance switch 14 is still not activated, an error signal may indicate that the gantry crane 12 has been stopped.

In this example, three variables may be relevant: an input from the vigilance switch 14, an output for the warning signal and an output for the error signal. In pseudo code, we have the following representation:

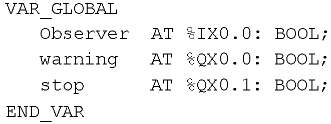

The industrial control program "Main" may run on the industrial controller unit 16, may process the input from the vigilance switch 14 and may control the operation of the gantry crane 12. In general, the program "Main" will also process further inputs and further outputs related to the operation of the gantry crane 12, but we will ignore these program parts to keep the presentation streamlined.

### PROGRAM Main

```
VAR
   trig1 : R_TRIG;
   trig2 : F_TRIG;
   timer1 : TOF;
   timer2 : TON;
   END_VAR
   trig1(clk := Observer);
   trig2(clk := Observer);
   timer1(IN := trig1.Q OR trig2.Q, PT := T#10S);
   Warning := NOT(timer1.Q) ;
   timer2(IN := IOVariables.Warning, PT := T#5S);
   Stop := timer2.Q;
   IF NOT Stop THEN
   /* code for control of machine */
   END_IF
   END_PROGRAM
```

The components R_TRIG, F_TRIG, TOF and TON that appear in this program code are standard components of the specification IEC 61131-3, which specifies programs, function blocks, functions, global data and user-defined data types such as structures for industrial control applications. Programs, function blocks and functions are sometimes collectively called program organization units (POU).

| | |
|---|---|
| R_TRIG: | function block to detect a rising edge (change from FALSE to TRUE) |
| F_TRIG: | function block to detect a falling edge (change from TRUE to FALSE) |
| TON: | timer function block; the timer is started when a rising edge is detected at the input, and returns TRUE at the output after a specified time |
| TOF: | timer function block; the timer is started when a falling edge is detected at the input, and returns TRUE at the output after a specified time |

To demonstrate the procedure, it is sufficient to consider R_TRIG and TOF, given that F_TRIG and TON are very similar to these two function blocks.

The pseudo code for the function block R_TRIG reads as follows:

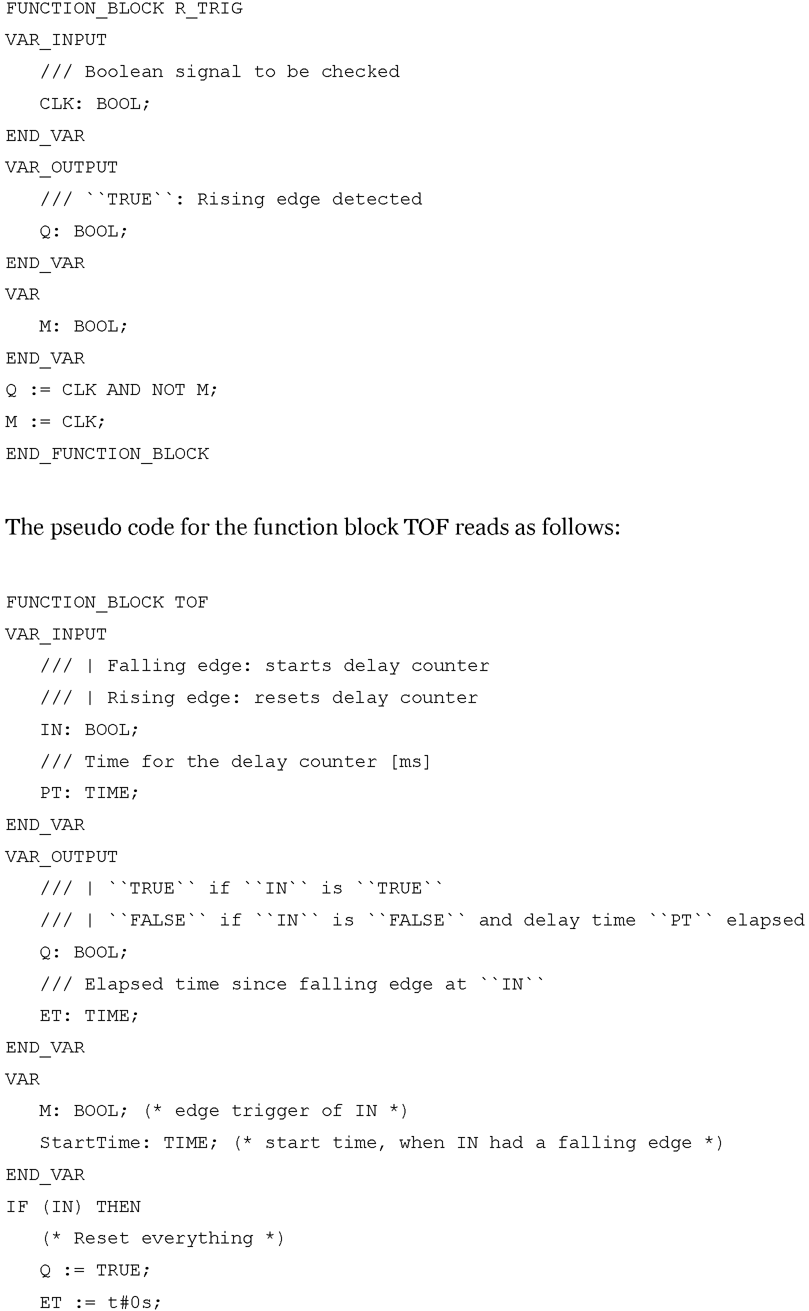

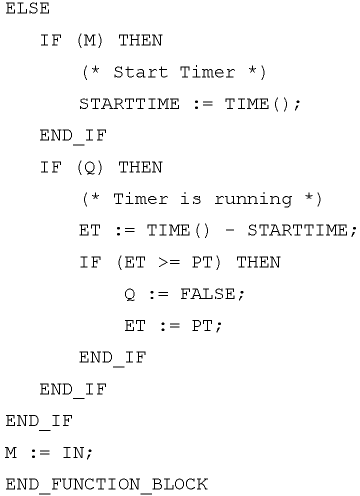

The function TIME () is a timer that returns a timestamp.

### (b) Conversion into Auxiliary Code

As described above, the conversion unit 50 may be adapted to convert the portion 42 of the source code into an auxiliary code that is better adapted for an automatic analysis. The converted industrial control program in the auxiliary code may have the following properties:
- The auxiliary code may be limited to unary and binary operations.
- The auxiliary code may be free from nested operations. For each operation, the result may be stored by means of an auxiliary variable. This is sometimes called a three-address code.
- The auxiliary code may be free from nested accesses, in particular deference cascades or nested component accesses. These operations may also be stored in auxiliary variables.
- The auxiliary variables may be declared ad hoc at any point in time, and at any code location.
- The auxiliary code may be free from control instructions, but may comprise jumps and labels.
- The auxiliary code may be free from instance variables and static variables in an expression. However, the auxiliary code may comprise local variables, as auxiliary variables.

Employing these techniques, the function block TOF discussed above may be converted into auxiliary code, as follows:

```
.type TOF extends $Object
 {
    .val IN: BOOL
    .val PT: TIME
    .val Q: BOOL
    .val ET: TIME
    .fun TOF() @open: BOOL
    {
       1¦ .var M: BOOL
       2¦ .var STARTTIME: TIME
       3¦ .var $t1: BOOL*
       4¦ .asv $t1 = &this.IN
       5¦ .var $t2: BOOL
       6¦ .asv $t2 = *$t1
       7¦ .var $t3: BOOL
       8¦ .asv $t3 = !$t2
       9¦ .jmp .if($t3) .lbl @21
       10¦ .var $t4: BOOL*
       11¦ .asv $t4 = &this.Q
       12¦ .var $t5: BOOL
       13¦ .asv $t5 = .true
       14¦ .asd *$t4 = $t5
       15¦ .var $t6: TIME*
       16¦ .asv $t6 = &this.ET
       17¦ .var $t7: TIME
       18¦ .asv $t7 = 0
       19¦ .asd *$t6 = $t7
       20¦ .jmp .lbl @66
       21¦ .lbl @21
       22¦ .var $t8: BOOL
       23¦ .asv $t8 = !M
       24¦ .jmp .if($t8) .lbl @26
       25¦ .asv STARTTIME = $GetTime()
       26¦ .lbl @26
       27¦ .var $t9: BOOL*
       28¦ .asv $t9 = &this.Q
       29¦ .var $t10: BOOL
       30¦ .asv $t10 = *$t9
       31¦ .var $t11: BOOL
       32¦ .asv $t11 = !$t10
       33¦ .jmp .if($t11) .lbl @66
       34¦ .var $t12: TIME
       35¦ .asv $t12 = $GetTime()
       36¦ .var $t13: TIME*
       37¦ .asv $t13 = &this.ET
       38¦ .var $t14: TIME
       39¦ .asv $t14 = $t12 - STARTTIME
       40¦ .asd *$t13 = $t14
       41¦ .var $t15: TIME*
       42¦ .asv $t15 = &this.ET
       43¦ .var $t16: TIME
       44¦ .asv $t16 = *$t15
       45¦ .var $t17: TIME*
       46¦ .asv $t17 = &this.PT
       47¦ .var $t18: TIME
       48¦ .asv $t18 = *$t17
       49¦ .var $t19: BOOL
       50¦ .asv $t19 = $t16 >= $t18
       51¦ .var $t20: BOOL
       52¦ .asv $t20 = !$t19
       53¦ .jmp if($t20) .lbl @66
       54¦ .var $t21: BOOL*
       55¦ .asv $t21 = &this.Q
       56¦ .var $t22: BOOL
       57¦ .asv $t22 = .false
       58¦ .asd *$t21 = $t22
       59¦ .var $t23: TIME*
       60¦ .asv $t23 = &this.PT
       61¦ .var $t24: TIME*
       62¦ .asv $t24 = &this.ET
       63¦ .var $t25: TIME
       64¦ .asv $t25 = *$t23
       65¦ .asd *$t24 = $t25
       66¦ .lbl @66
       67¦ .var $t26: BOOL*
       68¦ .asv $t26 = &this.IN
       69¦ .asv M = *$t26
       }
   }
```

Code/commandlines (running from 1 to 69) have been introduced into the auxiliary code to simplify the reference.

### (c) Conversion into Control Flow Graph

As described above, the conversion unit 50 may convert the auxiliary code into a control flow graph (CFG) to further simplify the analysis of the input-output interdependencies. The control flow graph contains related code blocks and the dependencies between these blocks.

In order to create a control flow graph, the conversion unit 50 may start with the first command of the auxiliary code and check its successor commands. The successor command may either be the next command in the list, in the order of the commands, or - in the case of unconditional jumps - the jump target, or - in the case of conditional jumps - the next command and the jump target. Loops in the auxiliary code could lead to return jumps, in which case the successor command could be a command which the conversion unit 50 has already processed. In this case, the conversion unit 50 may ignore the successor command. As a result, the control flow graph may be free of loops.

The syntax of the auxiliary code implies that each command may have exactly zero, one or two successor commands. For instance, a command with zero successors may be an end command. A command with one successor could be a command having a label. In this case, the command may start a new code block, and otherwise the command may be placed in the same code block as the current command. In case of two successors, both successors may start a new code block.

Previous code blocks may be double-linked to subsequent blocks as predecessors or successors, except for return jumps.

Fig. 5 shows a corresponding control flow graph 54 with the eight control blocks 56a, ..., 56h (depicted as boxes) of the auxiliary code for the function block TOF. The relations between the control blocks are indicated by means of arrows, and the control blocks are consecutively labelled with numbers 1, ..., 8 in the order in which they are generated, which may be the order of the program commands of the auxiliary code.

The control flow graph 54 has the following properties:
- Each function block has exactly one start block.
- No block has more than two successors (because there is only a conditional jump with a fixed destination).
- Code that cannot be reached does not appear in the control flow graph, such as code after a return or an exit in a loop.

### (d) Inserting Auxiliary Code Blocks into the Control Flow Graph

The analysis of the control flow graph 54 for input-output interdependencies may be further enhanced and simplified by selectively inserting additional code blocks, in particular for empty "if" statements that do not have an "else" statement.

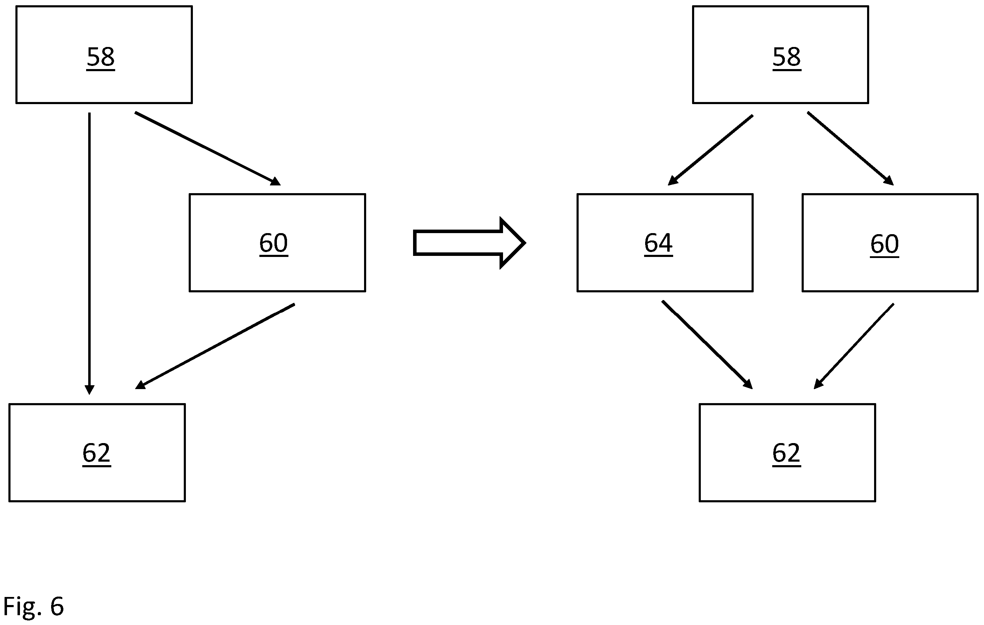

Fig. 6 schematically illustrates an empty "if" statement on the left-hand side, comprising an "if" condition 58, a "then" block 60 and a subsequent command 62. As illustrated on the right-hand side of Fig. 6, this statement may be formally converted into a statement that looks very much the same, and the same blocks are denoted with the same reference numerals, but which additionally has a dummy "else" block 64 that (only) contains a label to the subsequent command 62.

In the control flow graph 54, the conversion unit 50 may identify the positions where to insert additional code blocks as follows: If a code block has several successors, the conversion unit 50 may insert an additional code block for those successors that have several predecessors. The respective additional code block may be inserted between the predecessor and the successor blocks.

This conversion implies that, if a code block branches into two code blocks by means of a conditional jump, then the conditions for the branch apply to these successor code blocks, because there are no further branches to these code blocks. Each additional (inserted) code block may comprise simple code with a label and an unconditional jump to the original destination. In other words, the original jump instruction at the end of the predecessor block may be bent to the newly inserted code block.

In the example control flow graph 54 of Fig. 5, the conversion unit 50 may insert three additional code blocks 56i, 56j, and 56k (a ninth, tenth and eleventh code block, respectively):
- The third code block 56c has two successor code blocks 56d and 56e, wherein successor code block 56e has more than one predecessor code block. Hence, an auxiliary code block 56i is inserted, by the conversion unit 50, between the code blocks 56c and 56e.
- The fifth code block 56e has two successor code blocks 56f and 56h, wherein successor code block 56h has more than one predecessor code block. Hence, an auxiliary code block 56j is inserted, by the conversion unit 50, between the code blocks 56e and 56h.
- The sixth code block 56f has two successor code blocks 56g and 56h, wherein successor code block 56h has more than one predecessor code block. Hence, an auxiliary code block 56k is inserted, by the conversion unit 50, between the code blocks 56f and 56h.

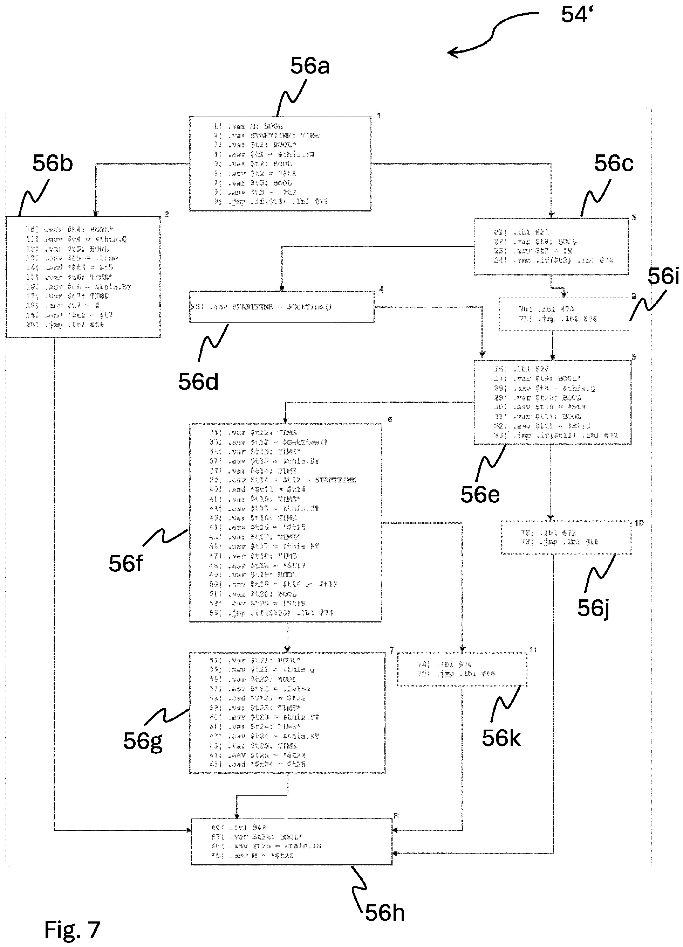

Fig. 7 shows the extended control flow graph 54' with the three additional auxiliary code blocks 56i, 56j, 56k being inserted. The three additional auxiliary code blocks 56i, 56j, 56k also comprise their respective jump instructions to the subsequent blocks 56e, 56h and 56h again, respectively.

### (e) Deriving Conditions from the Extended Control Flow Graph

As can be derived best from the extended control flow graph 54' of Fig. 7, some of the code blocks of the control flow graph are executed under specific conditions. Due to the simplified form of the extended control flow graph 54', the analysis unit 48 may automatically derive these conditions from the control flow graph 54'. The auxiliary code only allows simple temporary auxiliary variables as conditions for conditional jumps. Thus, the condition for the execution of a block can only be a temporary variable, or the negation of such a variable.

From an analysis of the control flow graph 54', the analysis unit 48 may determine the following conditions for the function block TOF:

| **Code Block** | **Condition** |
|---|---|
| | |
| #1 (56a) | None |
| #2 (56b) | NOT(t3) |
| #3 (56c) | t3 |
| #4 (56d) | NOT(t8) |
| #5 (56e) | None |
| #6 (56f) | NOT(t11) |
| #7 (56g) | NOT(t20) |
| #8 (56h) | None |
| #9 (56i) | t8 |
| #10 (56j) | t11 |
| #11 (56k) | t20 |

### (f) Deriving Alias Tables from the Extended Control Flow Graph

The simplification brought about by the auxiliary code and the control flow graph generally enhances the analysis, but may also introduce some complications. Static variables and instance variables are no longer used directly, but are always referenced indirectly.

As an example, we may consider the following code snippet from the auxiliary code for the function block TOF:
54¦ .var $t21: BOOL*
55¦ .asv $t21 = &this.Q
56¦ .var $t22: BOOL
57¦ .asv $t22 = .false
58¦ .asd *$t21 = $t22

This turns out to be the code for the original assignment
Q := FALSE;
in the portion 42 of the source code of the function block TOF.

An implicit/ auxiliary variable $t21 is introduced here, which contains a reference to the instance variable Q. In case the analysis unit 48 seeks to determine that the variable Q is written at this point, it needs to know that $t21 refers to Q. In the auxiliary code and/or control flow graph, this analysis is relatively easy to perform: an implicit variable is generally always introduced for a purpose, it is declared in one place, written in one place and read in one place. If an implicit variable is needed in a second place, then a new variable is usually introduced. Hence, an implicit/ auxiliary variable may usually only refer to one other variable.

The analysis unit 48 may employ these techniques to build up a correspondence table of auxiliary variables and the corresponding variables in the original source code 42. The analysis unit 48 may build the table on the fly, but can also determine it in advance. The analysis unit 48 may go through the statements of the code blocks from start to finish, and whenever an implicit reference variable is assigned a reference to another variable, this information may be entered into the correspondence table.

As an example, the correspondence table for the function block TOF would look as follows:

| **Auxiliary Variable** | **Alias for** |
|---|---|
| | |
| $t1 | this.IN |
| $t4 | this.Q |
| $t6 | this.ET |
| $t9 | this.Q |
| $t13 | this.ET |
| $t15 | this.ET |
| $t17 | this.PT |
| $t21 | this.Q |
| $t23 | this.PT |
| $t24 | this.ET |
| $t26 | this.IN |

### (g) Treating Conditions in the Analysis

Simple taint flow analyses only detect a taint in an assignment: if a variable on the right-hand side of the assignment contains a taint, the taint is transferred to the left-hand side of the assignment.

In the input-output analysis according to the present disclosure, the analysis unit 48 may also consider situations a taint in which the execution of the code block is conditioned by a variable itself having a taint.

As an example, consider the following "if" statement:

```
 IF IN1 THEN
   OUT := IN2;
   END_IF
```

In this example code, the variable OUT depends on both IN1 and IN2. The code could hence be written with identical semantics as follows,

```
 IF IN1 THEN
   OUT := IN2 AND IN1;
   END_IF
```

As one can see from the example code for the function block TOF, it makes sense to assume such a logic. In the TOF function block, the output Q is only written with Boolean values TRUE or FALSE. However, it directly depends on the value of IN1, which can only be recognized via the "if" condition. The analysis by the analysis unit 48 may take this into account.

This is essentially the same reason why the conversion unit 50 has introduced an auxiliary code block for a non-existent "else" statement in the control flow graph, as explained above with reference to Fig. 7. In the source code or the auxiliary code, this would correspond to the following code construction:

```
 IF IN1 THEN
   OUT := IN2 AND IN1;
   ELSE
   ;
   END_IF
   test := TRUE;
```

Without the dummy "else" path, the statement after END_IF would have two predecessor blocks: from the "if" query, it is accessed conditionally, whereas from the "then" statement it is accessed unconditionally. By introducing an auxiliary code block, or a dummy "else" path as sketched above, we may generate a code block that depends on exactly one condition, whereas the successor block no longer depends on any condition. This facilitates the test, for the analysis unit 48, whether a code block should be executed conditionally or not.

### (h) Handling Calls

In order to follow the input-output analysis across all boundaries, we may look at the parameters that are passed. In general, a function call in the auxiliary code may look as follows:
.asv TEST = var1.METH(var2, var3)

There is an object in which a method is called, and any number of parameters, all of which should be (temporary) stack variables. Complex expressions may need to be recopied. In our exemplary analysis, only Boolean variables carry a taint, and hence an instance variable (var1) in which the method is executed cannot usually itself carry a taint. But it can have member variables that can in turn carry a taint. These taints should be taken into account in the called function. This may be achieved by including the variable var1 (or the variable whose alias is var1) as a temporary alias in the alias table of the called function. In other words, var 1 replaces the implicit variable THIS when the function METH is analyzed.

The parameters at the call are easier to handle, because they stand for implicit assignments to temporary inputs. As an example,
.asv TEST = var1.METH(in1 := var2, in2 := var3)

These parameter transfers can be treated just like normal assignments, and hence a taint flow is from the right-hand side to the left-hand side. Note that there are also static calls without a THIS variable. In this case, only the parameters need to be handled.

Hence, the called function should be analyzed in the context of the call. In the case of several calls, there may be several analysis runs. The analysis presented here may assume that a THIS pointer can be determined statically. Industrial control programs rarely employ dynamic calls, and hence this may not pose a significant limitation. In case dynamic calls are to be handled, then all possible call targets may need to be taken into account.

### (i) Sequential Analysis of the Code Blocks

The analysis unit 48 may perform the input-output analysis code block by code block via the control flow graph 54'. Each function block may contain exactly one start code block, with which the processing begins. Further code blocks can be processed once all previous code blocks have been processed. As described above, the control flow graph may be free from loops, which makes a step-by step analysis feasible.

As an example, the analysis unit 48 may sort all the code blocks according to the line number of the first command. The next code block to be processed may then be the first code block in that list that has not yet been processed, and whose predecessor code blocks have all been processed.

For the function block TOF and the extended control flow graph 54' of Fig. 7, this results in the following processing order of the code blocks: 1 (56a), 2 (56b), 3 (56c), 4 (56d), 9 (56i), 5 (56e), 6 (56f), 7 (56g), 11 (56k), 10 (56j), 8 (56h).

### (j) Input-Output Analysis

From the analysis of the auxiliary code and/or the control flow graph, the analysis unit 48 may derive the following information for each function block:
- a list of instructions in the auxiliary code language;
- a control flow graph without jumps and with auxiliary code blocks;
- a table with conditions for the control blocks in the control flow graph; and
- an alias table for the auxiliary variables.

Two tables may be assigned to each code block: a first input table with the variables that carry a taint at the start of the analysis of the code block, and a first output table with the variables that carry a taint at the end of the analysis of the code block.

Similarly, two tables may also be assigned to each instruction in the auxiliary code: a first input table with the variables that carry a taint before the instruction is analyzed, and a first output table with the variables that carry a taint after analyzing the instruction.

The input table of the start code block of the initial function block of the industrial control program may be a table that only contains the input variable whose input-output behavior is to be analyzed. The input tables of the start code blocks of all other function blocks may be generated by the caller of the function block. The input tables of all further code blocks in a function block may be generated by merging the output tables of the predecessor blocks. The output table of the code block may be the output table of the last instruction of the code block. The input table of the first instruction of the code block may be the input table of the code block. The input table of each further instruction in a code block may be the output table of the previous instruction of the code block.

The output table of an instruction may be generated as follows:

In the case of an assignment: The input table of the instruction, plus the variable on the left-hand side of the assignment, if one of the variables on the right-hand side of the assignment occurs in the input table, plus any alias variables on the left-hand side of the assignment.

In the case of a call: The input table for the first block of the called function is determined. This is the input table of the instruction. In case of parameter assignments, if the actual parameter is contained in the input table of the instruction, the formal parameter is inserted into the table for the called function.

With further reference to the case of a call, the called instance is determined (typically in the alias table), and will be written to the alias table for the analysis of the called function. The called function is analyzed with the input table and the alias table that have been determined in this way, beginning with the start block. The output table of the call can then be considered the union of all output tables of all end blocks of the called function.

In case of any other instruction, the output table may be taken as the input table of the instruction.

In order to carry out the input-output analysis for the vigilance switch 14, we still need the auxiliary code for the remaining components Main, TON, R_TRIG, and F_TRIG. To simplify matters and to streamline the presentation, we will omit TON, which is in fact very similar to TOF that we discussed above. We can also assume the result of the analysis of TOF for TON.

The auxiliary code for the remaining component Main looks as follows:

```
 .type $MAIN extends $Object
 {
   .val TRIG1 @static: R_TRIG
   .val TRIG2 @static: F_TRIG
   .val TIMER1 @static: TOF
   .val TIMER2 @static: TON
   .fun MAIN() @static: VOID
   {
       1¦ .var $t1: R_TRIG*
       2¦ .asv $t1 = &MAIN: :TRIG1
       3¦ .var $t2: BOOL*
       4¦ .asv $t2 = &$t1.CLK
       5¦ .var $t3: BOOL*
       6¦ .asv $t3 = &IOVARIABLES::OBSERVER
       7¦ .var $t4: BOOL
       8¦ .asv $t4 = *$t3
       9¦ .asd *$t2 = $t4
       10¦ .inv $t1.R_TRIG()
       11¦ .var $t5: F_TRIG*
       12¦ .asv $t5 = &MAIN::TRIG2
       13¦ .var $t6: BOOL*
       14¦ .asv $t6 = &$t5.CLK
       15: .var $t7: BOOL*
       16¦ .asv $t7 = &IOVARIABLES::OBSERVER
       17¦ .var $t8: BOOL
       18¦ .asv $t8 = *$t7
       19¦ .asd *$t6 = $t8
       20¦ .inv $t5.F_TRIG()
       21¦ .var $t9: TOF*
       22¦ .asv $t9 = &MAIN::TIMER1
       23¦ .var $t10: BOOL*
       24¦ .asv $t10 = &$t9.IN
       25¦ .var $t11: R_TRIG*
       26¦ .asv $t11 = &MAIN::TRIG1
       27¦ .var $t12: BOOL*
       28¦ .asv $t12 = &$t11.Q
       29¦ .var $t13: BOOL
       30¦ .asv $t13 = *$t12
       31¦ .var $t14: F_TRIG*
       32¦ .asv $t14 = &MAIN::TRIG2
       33¦ .var $t15: BOOL*
       34¦ .asv $t15 = &$t14.Q
       35¦ .var $t16: BOOL
       36¦ .asv $t16 = *$t15
       37¦ .var $t17: BOOL
       38¦ .asv $t17 = $t13 | $t16
       39¦ .asd *$t10 = $t17
       40¦ .var $t18: TIME*
       41¦ .asv $t18 = &$t9.PT
       42¦ .var $t19: TIME
       43¦ .asv $t19 = 10000
       44¦ .asd *$t18 = $t19
       45¦ .inv $t9.TOF()
       46¦ .var $t20: TOF*
       47¦ .asv $t20 = &MAIN::TIMER1
       48¦ .var $t21: BOOL*
       49¦ .asv $t21 = &$t20.Q
       50¦ .var $t22: BOOL
       51¦ .asv $t22 = *$t21
       52¦ .var $t23: BOOL*
       53¦ .asv $t23 = &IOVARIABLES::WARNING
       54¦ .var $t24: BOOL
       55¦ .asv $t24 = !$t22
       56¦ .asd *$t23 = $t24
       57¦ .var $t25: TON*
       58¦ .asv $t25 = &MAIN::TIMER2
       59¦ .var $t26: BOOL*
       60¦ .asv $t26 = &$t25.IN
       61¦ .var $t27: BOOL*
       62¦ .asv $t27 = &IOVARIABLES::WARNING
       63¦ .var $t28: BOOL
       64¦ .asv $t28 = *$t27
       65¦ .asd *$t26 = $t28
       66¦ .var $t29: TIME*
       67¦ .asv $t29 = &$t25.PT
       68¦ .var $t30: TIME
       69¦ .asv $t30 = 5000
       70¦ .asd *$t29 = $t30
       71¦ .inv $t25.TON()
       72¦ .var $t31: TON*
       73¦ .asv $t31 = &MAIN::TIMER2
       74¦ .var $t32: BOOL*
       75¦ .asv $t32 = &$t31.Q
       76¦ .var $t33: BOOL*
       77¦ .asv $t33 = &IOVARIABLES::STOP
       78¦ .var $t34: BOOL
       79¦ .asv $t34 = *$t32
       80¦ .asd *$t33 = $t34
       81¦ .var $t35: BOOL*
       82¦ .asv $t35 = &IOVARIABLES::STOP
       83¦ .var $t36: BOOL
       84¦ .asv $t36 = *$t35
       85¦ .var $t37: BOOL
       86¦ .asv $t37 = !$t36
       87¦ .var $t38: BOOL
       88¦ .asv $t38 = !$t37
       89¦ .jmp .if($t38) .lbl @90
       90¦ .jmp .lbl @90
       91¦ .lbl @90
   }
 }
```

The auxiliary code for the remaining component R_TRIG looks as follows:

```
 .type R_TRIG extends $Object
 {
   .val CLK: BOOL
   .val Q: BOOL
 .fun R_TRIG() @open: BOOL
 {
       1¦ .var Q: BOOL
       2¦ .var M: BOOL
       3¦ .var $t1: BOOL*
       4¦ .asv $t1 = &this.CLK
       5¦ .var $t2: BOOL
       6¦ .asv $t2 = *$t1
       7¦ .var $t3: BOOL*
       8¦ .asv $t3 = &this.M
       9¦ .var $t4: BOOL
       10¦ .asv $t4 = *$t3
       11¦ .var $t5: BOOL
       12¦ .asv $t5 = !$t4
       13¦ .var $t6: BOOL*
       14¦ .asv $t6 = &this.Q
       15¦ .var $t7: BOOL
       16¦ .asv $t7 = $t2 & $t5
       17¦ .asd *$t6 = $t7
       18¦ .var $t8: BOOL*
       19¦ .asv $t8 = &this.CLK
       20¦ .var $t9: BOOL*
       21¦ .asv $t9 = &this.M
       22¦ .var $t10: BOOL
       23¦ .asv $t10 = *$t8
       24¦ .asd *$t9 = $t10
   }
 }
```

The auxiliary code for the remaining component F_TRIG looks as follows:

```
 .type F_TRIG extends $Object
 {
   .val CLK: BOOL
   .val Q: BOOL
 .fun F_TRIG() @open: BOOL
 {
       1¦ .var Q: BOOL
       2¦ .var M: BOOL
       3¦ .var $t1: BOOL*
       4¦ .asv $t1 = &this.M
       5¦ .var $t2: BOOL
       6¦ .asv $t2 = .true
       7¦ .asd *$t1 = $t2
       8¦ .var $t3: BOOL*
       9¦ .asv $t3 = &this.CLK
       10¦ .var $t4: BOOL
       11¦ .asv $t4 = *$t3
       12¦ .var $t5: BOOL
       13¦ .asv $t5 = !$t4
       14¦ .var $t6: BOOL*
       15¦ .asv $t6 = &this.M
       16¦ .var $t7: BOOL
       17¦ .asv $t7 = *$t6
       18¦ .var $t8: BOOL
       19¦ .asv $t8 = !$t7
       20¦ .var $t9: BOOL*
       21¦ .asv $t9 = &this.Q
       22¦ .var $t10: BOOL
       23¦ .asv $t10 = $t5 & $t8
       24¦ .asd *$t9 = $t10
       25¦ .var $t11: BOOL*
       26¦ .asv $t11 = &this.CLK
       27¦ .var $t12: BOOL
       28¦ .asv $t12 = *$t11
       29¦ .var $t13: BOOL*
       30¦ .asv $t13 = &this.M
       31¦ .var $t14: BOOL
       32¦ .asv $t14 = !$t12
       33¦ .asd *$t13 = $t14
   }
 }
```

The alias table for the function block R_TRIG is rather short:

| **Auxiliary Variable** | **Alias for** |
|---|---|
| | |
| $t1, $t8 | this.CLK |
| $t3, $t9 | this.M |
| $t6 | this.Q |

The alias table for the component Main contains the somewhat more complex case where an alias refers to another alias. In particular, $t1 is an alias of the variable TRIG1, and $t1 is an alias of $t1.CLK. When building the alias table, the analysis unit 48 may replace such an alias on the right-hand side of the assignment with the original variable. This may result in the following alias table for the component Main.

| **Auxiliary Variable** | **Alias for** |
|---|---|
| | |
| $t1, $t11 | MAIN::TRIG1 |
| $t2 | MAIN::TRIG1.CLK |
| $t3, $t7 | IOVARIABLES::OBSERVER |
| $t5, $t14 | MAIN::TRIG2 |
| $t6 | MAIN:TRIG2.CLK |
| $t9, $t20 | MAIN::TIMER1 |
| $t10 | MAIN::TIMER1.IN |
| $t12 | MAIN::TRIG1.Q |
| $t15 | MAIN::TRIG2.Q |
| $t18 | MAIN::TIMER1.PT |
| $t21 | MAIN::TIMER1.Q |
| $t23, $t27 | IOVARIABLES:WARNING |
| $t25, $t31 | MAIN::TIMER2 |
| $t26 | MAIN::TIMER2.IN |
| $t29 | MAIN::TIMER2.PT |
| $t32 | MAIN::TIMER2.Q |
| $t33, $t35 | IOVARIABLES::STOP |

The analysis unit 48 may use this information to run through the auxiliary code/control flow graph from start to finish and check line by line whether a taint flow takes place. For instance calls, the called instance is analyzed. The implicit THIS parameter in the called function may be replaced by the explicit instance.

The following (abbreviated) table shows the sequence of the analysis in the order of processing. When proceeding through the program flow, the analysis unit 48 considers those points at which the set of tainted variables changes. Whenever a temporary/ auxiliary variable no longer appears in the code, the analysis unit may remove it from the set of tainted variables so that the set of tainted variables does not become overly clogged. In the presentation, we will also skip the call to the Main::Timer2 block, given that it is very similar to the call of Main::Timer1.

In the table, the action Assignment means that either a reference to a variable with taint is assigned, or a value of the variable with taint is assigned. Strictly speaking, when assigning a reference to a variable, the assigned variable should only be saved as an alias. Only when this assigned variable is dereferenced may a taint flow be assumed. However, implicit variables of the reference type are only created to reference another variable and are only used once. If this variable contains a taint, the analysis unit 48 may simply include the reference in the taint list. When the reference is used, a taint flow will certainly take place.

In our case, only implicitly created local variables may have references to other variables. Explicit references in the code could contain different variables and may need to be handled differently.

The action Alias Propagation in the table means that the variable on the left-hand side of an assignment appears in the alias table, and the alias is included in the output table.

The action Condition of the block may mean that an assignment to a Boolean variable, or the assignment of a reference to a Boolean variable in a code block has been found, wherein the condition is a variable in the current taint list.

The table has been abbreviated to the first four entries and the final four entries, whereas intermediate entries have been omitted to streamline the presentation:

| **Component** | **Block in CFG** | **Line** | **Action** | **Output Table** |
|---|---|---|---|---|
| Main | #1 | 0 | Assignment | {Observer} |
| Main | #1 | 6 | Assignment | {Observer, $t3} |
| Main | #1 | 8 | Assignment | {Observer, $t3, $t4} |
| Main | #1 | 9 | Assignment & Alias Propagation | {Observer, $t3, $t4, $t2, Main::Trig1.CLK} |
| ... | ... | ... | ... | ... |
| Main | #1 | 82 | Assignment & Alias Propagation | {Observer, Main::Trig1.CLK, Main::Trig1.Q, Main::Trig1.M, |
| | | | | Main::Trig2.CLK, Main::Trig2.Q, Main::Trig2.M, Main::Timer1.IN, Main::Timer1.Q, Warning, Main::Timer2.IN, $t32, $t34, $t33, STOP, $t35} |
| Main | #1 | 84 | Assignment & Alias Propagation | {Observer, Main::Trig1.CLK, Main::Trig1.Q, Main::Trig1.M, Main::Trig2.CLK, Main::Trig2.Q, Main::Trig2.M, Main::Timer1.IN, Main::Timer1.Q, Warning, Main::Timer2.IN, $t32, $t34, $t33, STOP, $t35, $t36} |
| Main | #1 | 86 | Assignment & Alias Propagation | {Observer, Main::Trig1.CLK, Main::Trig1.Q, Main::Trig1.M, Main::Trig2.CLK, Main::Trig2.Q, Man::Trig2.M, Main::Timer1.IN, Main::Timer1.Q, Warning, Main::Timer2.IN, $t32, $t34, $t33, STOP, $t35, $t36, $t37} |
| Main | #1 | 88 | Assignment & Alias Propagation | {Observer, Main::Trig1.CLK, |
| | | | | Main::Trig1.Q, Main::Trig1.M, Main::Trig2.CLK, Main::Trig2.Q, Main::Trig2.M, Main::Timer1.IN, Main::Timer1.Q, Warning, Main::Timer2.IN, $t32, $t34, $t33, STOP, $t35, $t36, $t37, $t38} |

As can be taken from the table, the input "Observer" affects the outputs "Warning" and "Stop", as would be expected for the vigilance switch 14.

In order to streamline the presentation, we have not displayed the control flow graph of the function block Main. But an analysis as for the function block TOF would result in a conditional code block with a line 90 that depends on the auxiliary variable $t38. Hence, if one replaces the code in the comment with a code for the industrial control, all Boolean variables assigned in this code block would be included in the taint block. In particular, all outputs that are written here would be included in the taint list. This corresponds to the semantics of the vigilance switch 14, because it should affect all outputs in the program.

In the same manner, the analysis unit 48 may analyze all other inputs of the industrial control program. The output unit 52 may then output a complete list of all inputs that have an effect on this output. In the example of the vigilance switch 14, it would probably be unexpected if variables other than the Observer variable had an influence on Warning and Error.

As a result, the output unit 52 may present a programmer with a complete list of the outputs on which given a input has an effect. Similarly, for each given output variable, the output unit 52 may present a complete list of the input variables that affect this particular output. The programmer may employ this information to check whether the detected input-output interdependencies meet his expectations, and he may improve his programming accordingly.

### (k) Variable Attribution and Memory Allocation

Based on the results received from the output unit 52, the programmer may provide a syntax for attributing the input variables 44 and the output variables 46.

For instance, {affects<list_of_variables>} may be employed as an attribute for an input to define the list of variables on which the input acts. It may be considered an error if the input does not affect one of these variables.

Similarly, {affects_only<list_of_variables>} may be employed as an attribute for an input to define an exclusive list of variables on which the input acts. It may be considered an error if the input does not affect one of these variables, and may also be considered an error if the input acts on another output variable outside of this list.

In the same way, {affected_by<list_of_variables>} may be employed as an attribute for an output to define a list of inputs from which effects on this particular output are expected. It may be considered an error if the output is not affected by one of these input variables.

Similarly, {only_affected_by<list_of_variables>} may be used as an attribute for an output to define an exclusive list of input variables from which effects on this particular output are expected. It may be considered an error if the output is not affected by one of these input variables, and it may likewise be considered an error in case the output is affected by any other input variable outside of this list.

Based on the information received from the output unit 52, the programmer may also define address ranges for the controller memory unit 24, to allocate memory space for the input variables 44 and the output variables 46. In particular, the programmer may group input variables 44 in the controller memory unit 24 depending on which output variables 46 they affect, and/or to group output variables 46 in the controller memory unit 24 in accordance with the input variables 44 that affect them.

The examples and the Figures merely serve to illustrate the method and system according to the disclosure, but should not be understood to imply any limitation. The scope of the disclosure is to be determined by means of the appended claims.

### Reference Signs

- 10: industrial control environment
- 12: gantry crane
- 14: vigilance switch
- 16: industrial controller unit
- 18: control line
- 20: processing device
- 22: communication interface
- 24: controller memory unit
- 26: programming environment
- 28: network
- 30: programming unit
- 32: compiler unit
- 34: network
- 36: server unit
- 38, 38': system for analyzing a source code of an industrial control program
- 40: memory unit
- 42: portion of a source code of an industrial control program
- 44: input variables
- 46: output variables
- 48: analysis unit
- 50: conversion unit
- 52: output unit
- 54: code flow graph
- 54': extended code flow graph
- 56a, ..., 56k: code blocks
- 58: "if" condition
- 60: "then" block
- 62: subsequent command
- 64: dummy "else" block

## Claims

1. A method for analyzing a source code of an industrial control program, comprising:
providing at least a portion (42) of the source code of the industrial control program, wherein the portion (42) comprises at least a first plurality of input variables (44) and at least a second plurality of output variables (46);
determining, for at least one output variable among the second plurality of output variables (46), which of the input variables among the first plurality of input variables (44) affects the output variable; and/or
determining, for at least one input variable among the first plurality of input variables (44), which of the output variables among the second plurality of output variables (46) is affected by the input variable.

2. The method according to claim 1, the method further comprising:
converting the portion (42) of the source code into an auxiliary code, wherein the auxiliary code contains only unary operations and/or binary operations, and/or wherein the auxiliary code is free from nested procedures, and/or wherein each command in the auxiliary code has no more than two subsequent commands to which it refers.

3. The method according to claim 2, wherein converting the portion (42) of the source code into the auxiliary code comprises introducing a plurality of auxiliary variables into the auxiliary code.

4. The method according to any one of the preceding claims, further comprising:
converting the portion (42) of the source code or the auxiliary code, respectively, into a control flow graph (54; 54').

5. The method according to claim 4, wherein the control flow graph (54; 54') comprises a plurality of code blocks (56a, ..., 56k), wherein each code block (56a, ..., 56k) comprises at least one command.

6. The method according to claim 4 or 5, wherein:
converting the portion (42) of the source code or the auxiliary code, respectively, into the control flow graph (54; 54') proceeds in the listed order of the commands of the source code or the auxiliary code, respectively.

7. The method according to any one of the claims 4 to 6, further comprising:
removing loops from the control flow graph (54; 54').

8. The method according to claim 5, optionally in combination with claim 6 and/or claim 7, wherein, in the control flow graph (54; 54'), each code block (56a, ..., 56k) refers to at most two other code blocks (56a, ..., 56k).

9. The method according to claim 5, optionally in combination with any one of the claims 6 to 8, further comprising:
inserting at least one additional code block (56a, ..., 56k) into the control flow graph (54; 54'), wherein the at least one additional code block (56a, ..., 56k) is inserted between a first code block (56a, ..., 56k) among the plurality of code blocks (56a, ..., 56k) that refers to more than one other code block (56a, ..., 56k), and a second code block (56a, ..., 56k) among the plurality of code blocks (56a, ..., 56k) to which more than one code block (56a, ..., 56k) among the plurality of code blocks (56a, ..., 56k) refers.

10. The method according to claim 9, wherein the additional code block (56a, ..., 56k) comprises a command that refers to the second code block (56a, ..., 56k).

11. The method according to claim 5, optionally in combination with any one of the claims 6 to 10, further comprising:
determining, from the auxiliary code or the control flow graph (54; 54'), respectively, a list of conditions pertaining to each code block (56a, ..., 56k).

12. The method according to claim 3, optionally in combination with any one of the claims 4 to 11, further comprising:
assigning, from the auxiliary code or the control flow graph (54; 54'), respectively, variables of the source code to the auxiliary variables.

13. A computer program comprising computer-readable instructions such that the computer-readable instructions, when executed on a computer, implement on the computer a method according to any one of the preceding claims.

14. A system (38; 38') for analyzing a source code of an industrial control program, the system comprising:
a memory unit (40) for providing at least a portion (42) of the source code of the industrial control program, wherein the portion (42) comprises at least a first plurality of input variables (44) and at least a second plurality of output variables (46); and
an analysis unit (48) for determining, for at least one output variable among the second plurality of output variables (46), which of the input variables among the first plurality of input variables (44) affects the output variable; and/or for determining, for at least one input variable among the first plurality of input variables (44), which of the output variables among the second plurality of output variables (46) is affected by the input variable.

15. The system (38; 38') according to claim 14, wherein the system (38; 38') is adapted to implement a method according to any one of the claims 1 to 12.
